# EUROPEAN PATENT APPLICATION

(11) **EP 4 324 938 A1**
(43) Date of publication of application: **21.02.2024**
(21) Application number: 22824662.5
(22) Date of filing: 08.04.2022
(51) Int. Cl.: C21B 13/00, C22B 1/16, C22B 1/20

(54) **METHOD FOR PRODUCING AGGLOMERATED ORE, METHOD FOR PRODUCING REDUCED IRON, AGGLOMERATED ORE, SINTERING MACHINE AND PELLET FIRING FURNACE**

(30) Priority: 17.06.2021 JP 2021101097
(71) Applicant: JFE Steel Corporation, Tokyo 100-0011 (JP)
(72) Inventor: MORIYA, Kota, Tokyo 100-0011 (JP); TERUI, Koki, Tokyo 100-0011 (JP); OZAWA, Sumito, Tokyo 100-0011 (JP)
(74) Representative: Grünecker Patent- und Rechtsanwälte PartG mbB
(86) International application number: PCT/JP2022/017432
(87) International publication number: WO 2022/264667

(57) **Abstract**

To provide a method for producing agglomerated ore, with which reduced iron can be efficiently produced by hydrogen reduction, without the need for preheating raw material and raising the temperature of reducing gas. A method for producing agglomerated ore, the method including sintering a sintering raw material containing an iron-containing raw material and a condensation material in a sintering machine to form a sinter cake, and obtaining agglomerated ore by crushing the sinter cake, in which iron oxide contained in the sinter cake is reduced by distributing a reducing gas through the sinter cake on the sintering machine, to make a degree of reduction of iron oxide contained in the agglomerated ore after crushing 50 % or more.

## Description

### TECHNICAL FIELD

This disclosure relates to a method for producing agglomerated ore, a method for producing reduced iron, agglomerated ore, a sintering machine, and a pellet firing furnace.

### BACKGROUND

A blast furnace method, which uses coke as a reducing material to produce hot metal, a method for blowing reducing gas as a reducing material into a vertical furnace (hereinafter referred to as a "shaft furnace"), a method for reducing fine ore in a fluidized bed using the reducing gas similarly, and a method for combining agglomeration and reduction of raw material (rotary kiln method) are known as methods of producing iron by reducing an iron oxide-containing raw material.

Of these methods, in the methods of producing reduced iron other than the blast furnace method, a reducing gas mainly composed of carbon monoxide (CO) or hydrogen (H₂), which is produced by reforming natural gas or coal, is used as the reducing material. The raw material charged into the furnace is heated and reduced by convection heat transfer with the reducing gas and then discharged outside the furnace. Oxidized gases such as water (H₂O) and carbon dioxide (CO₂), as well as H₂ and CO gases that did not contribute to the reduction reaction, are discharged from the furnace.

The raw material (mainly Fe₂O₃) charged into the furnace undergoes the reduction reactions represented in Formulas (1) and (2) below from CO and H₂ gases, which are reducing gases.

Fe₂O₃ + 3CO -> 2Fe + 3CO₂ ... (1)

Fe₂O₃ + 3H₂ -> 2Fe + 3H₂O ... (2)

In other words, in the reduction by CO gas represented in Formula (1), CO₂ gas is emitted as exhaust gas after reduction. On the other hand, in the reduction by H₂ gas represented in Formula (2), H₂O gas is emitted as exhaust gas after reduction.

As the raw material charged into the furnace, iron ore or agglomerated ore formed by agglomeration of fine-grained iron ore is mainly used. For example, sintered ore produced by sintering fine-grained iron ore using a sintering machine or pellets formed by granulating and firing fine-grained iron ore into a spherical shape are used as the agglomerated ore. In the process of producing such agglomerated ore, the temperature normally needs to be 1200 °C or more. Therefore, in the sintering production process, fine coal or coke is charged as a condensation material along with iron ore, and its combustion heat is used. In the pellet production process, the combustion heat of fossil fuel such as coal and natural gas is used to raise the temperature of the atmosphere.

In recent years, global warming due to increased CO₂ gas emissions has been a problem. To control CO₂ emissions, one of the greenhouse gases considered to be a factor in global warming, the amount of reduction reaction with H₂ represented in Formula (2) may be increased. In the reduction reactions by CO and H₂, each amount of heat generated or absorbed by the reaction differs from one another. That is, the heat of reduction reaction with H₂ represented in Formula (2) may be increased. In the reduction reactions by CO is +6710 kcal/kmol (Fe₂O₃), while the heat of reduction reaction with H₂ represented in Formula (2) may be increased. In the reduction reactions by H₂ is -22800 kcal/kmol (Fe₂O₃). In other words, the former is an exothermic reaction, while the latter is an endothermic reaction. Therefore, if the reaction amount in Formula (2) is intended to increase by increasing the concentration of H₂ in the reducing gas, a significant endothermic reaction may occur, lowering the temperature in the furnace and causing the reduction reaction to stagnate. Therefore, it is necessary to compensate for the insufficient heat by some means.

As a technique to compensate for the insufficient heat, Patent Literature (PTL) 1 discloses a method for preheating raw material to be charged from the top to 100 °C or more and 627 °C or less in advance.

### CITATION LIST

### Patent Literature

PTL 1: JP5630222B

### SUMMARY

### (Technical Problem)

However, the method proposed in PTL 1 requires facilities to preheat the raw material in advance, which increases the production cost. Another possible method is to raise the temperature of the reducing gas instead of preheating the raw material. However, excessively raising the temperature of hydrogen, which burns at a high rate and over a wide concentration range, is a high safety risk. Furthermore, excessive raising of the temperature of the reducing gas induces deterioration of gas permeability in the furnace and raw material discharging properties due to the melting of the charge in the reduction furnace. Therefore, there is a limit to thermal compensation by raising the temperature of the reducing gas.

It could therefore be helpful to provide a method for producing agglomerated ore, with which reduced iron can be efficiently produced by hydrogen reduction, without the need for preheating raw material and raising the temperature of reducing gas.

### (Solution to Problem)

To achieve the above-described problems, we have intensively studied and discovered that a method for producing agglomerated ore as described below can solve the above-described problems. We provide the following.
[1] A method for producing agglomerated ore, the method comprising sintering a sintering raw material containing an iron-containing raw material and a condensation material in a sintering machine to form a sinter cake, and obtaining agglomerated ore by crushing the sinter cake,
   wherein iron oxide contained in the sinter cake is reduced by distributing a reducing gas through the sinter cake on the sintering machine, to make a degree of reduction of iron oxide contained in the agglomerated ore after crushing 50 % or more.
[2] The method for producing agglomerated ore according to [1], wherein the sintering machine includes a sintering portion that sinters the sintering raw material to form the sinter cake and a reduction portion that distributes the reducing gas through the sinter cake.
[3] The method for producing agglomerated ore according to [2], wherein the reducing gas is introduced from a lower side of the sinter cake at the reduction portion.
[4] The method for producing agglomerated ore according to any one of [1] to [3], wherein the condensation material contains a biomass raw material.
[5] A method for producing agglomerated ore, the method comprising granulating an iron-containing raw material to form raw pellets, and firing the raw pellets in a pellet firing furnace to obtain agglomerated ore,
   wherein iron oxide contained in the iron-containing raw material is reduced by distributing a reducing gas through pellets before reduction after firing on the pellet firing furnace, to make a degree of reduction of iron oxide contained in agglomerated ore after reduction 50 % or more.
[6] The method for producing agglomerated ore according to [5], wherein the pellet firing furnace includes a firing portion that fires the raw pellets to form the pellets before reduction and a reduction portion that distributes the reducing gas through the pellets before reduction.
[7] The method for producing agglomerated ore according to [5] or [6], wherein the raw pellets are fired by a firing fuel containing a biomass raw material.
[8] A method for producing reduced iron, the method comprising reducing iron oxide contained in agglomerated ore produced using the method for producing agglomerated ore according to any one of [1] to [7] to obtain reduced iron.
[9] Agglomerated ore having a degree of reduction of iron oxide of 50 % or more.
[10] A sintering machine comprising:
   a sintering portion that sinters a sintering raw material containing an iron-containing raw material and a condensation material to form a sinter cake; and
   a reduction portion that reduces iron oxide contained in the sinter cake by distributing a reducing gas through the sinter cake.
[11] A pellet firing furnace comprising:
   a firing portion that fires raw pellets containing an iron-containing raw material to form pellets before reduction; and
   a reduction portion that reduces iron oxide contained in the iron-containing raw material by distributing a reducing gas through the pellets before reduction.

### (Advantageous Effect)

According to this disclosure, it is possible to provide a method for producing agglomerated ore, with which reduced iron can be efficiently produced by hydrogen reduction, without the need for preheating raw material and raising the temperature of reducing gas.

### BRIEF DESCRIPTION OF THE DRAWINGS

In the accompanying drawings:
FIG. 1 is a drawing illustrating an overview of a method for producing agglomerated ore using a sintering machine;
FIG. 2 is a drawing illustrating an overview of a method for producing agglomerated ore using a pellet firing furnace; and
FIG. 3 is a drawing illustrating an overview of production of reduced iron using a shaft furnace.

### DETAILED DESCRIPTION

This disclosure relates to a method for producing agglomerated ore, as a preceding process for a process of reducing iron oxide contained in agglomerated ore using a reducing gas mainly composed of hydrogen by introducing the reducing gas into a reduction furnace, to obtain reduced iron.

We have intensively studied a technology to decrease the amount of CO₂ emitted during the production of agglomerated ore for producing reduced iron. We also have studied an approach to solve the problem of heat absorption of the iron ore reduction reaction by hydrogen, in the efficient production of reduced iron from agglomerated ore using hydrogen, by a method without preheating the agglomerated ore.

Conventionally, when reduced iron is produced in a reduction furnace, fine ore as well as pellets made of fine ore baked into a spherical shape are used. In addition, agglomerated ore called sintered ore, which is obtained by sintering raw material by a device called a sintering machine, is sometimes used, although this is an example mainly used in a blast furnace among reduction furnaces. When the pellets are fired, the temperature is usually raised to around 1300 °C. When the sintered ore is sintered, the temperature is usually raised to around 1250 °C. In the present disclosure, the above pellets and sintered ore are collectively referred to as "agglomerated ore".

The agglomerated ore produced as described above needs to be conveyed to the facility (site) where it will be used. However, the temperature of the agglomerated ore is about 1260 °C for pellets and 800 °C to 1200 °C for sintered ore. Therefore, there is a risk that the belt may burn when the agglomerated ore is conveyed by a belt conveyor or the like. Conventionally, the produced agglomerated ore such as pellets or sintered ore is charged into a device called a cooler. After the sensible heat possessed by the agglomerated ore is recovered, the agglomerated ore is conveyed to the site. The recovered sensible heat is used for, for example, a boiler.

We conceived of using the sensible heat possessed by the agglomerated ore after its production, which has been conventionally recovered by the cooler, as a heat source for the reduction reaction with H₂, thus completing this disclosure. In this disclosure, the sensible heat obtained during the production of agglomerated ore to be charged into the reduction furnace is also used for the reduction reaction of iron oxide during the production process of agglomerated ore. If the agglomerated ore produced in this way is reduced by hydrogen in the reduction furnace, reduced iron can be efficiently produced by hydrogen reduction, without the need for preheating raw material and raising the temperature of reducing gas.

Embodiments of this disclosure will be described with reference to the attached drawings hereinafter. The embodiments of this disclosure are not limited to the following embodiments as long as they do not depart from the gist of this disclosure.

### «Method for producing agglomerated ore»

### <Embodiment 1>

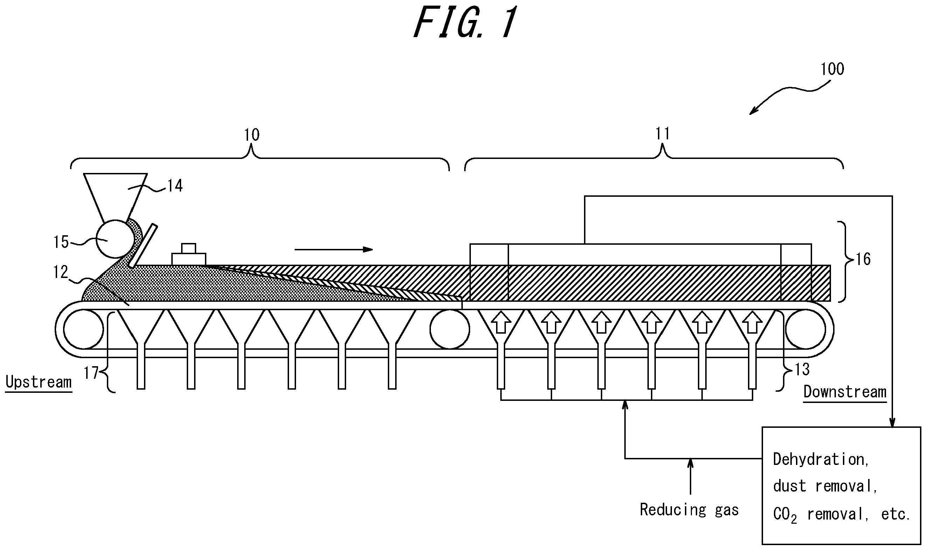

First, a method for producing agglomerated ore according to Embodiment 1 of this disclosure will be described. In this embodiment, a sinter cake is reduced using the sensible heat during sintering on a sintering machine that sinters a sintering raw material containing an iron-containing raw material and a condensation material to obtain agglomerated ore with a degree of reduction of iron oxide of 50 % or more. FIG. 1 illustrates an overview of a sintering machine 100. As illustrated in FIG. 1, the sintering machine 100 includes a sintering portion 10 and a reduction portion 11.

A sintering raw material obtained by mixing an iron-containing raw material and a condensation material is charged onto a pallet 12 of the sintering portion 10 through a charging hopper 14 and a drum feeder 15. The charged sintering raw material becomes a raw material charged layer on the pallet 12. The sintering raw material in the raw material charged layer begins to be sintered when the condensation material at the top layer is ignited by an ignition furnace, forming a combustion region. Air is drawn in from the bottom of the pallet 12 to form a gas flow from the top to the bottom of the raw material charged layer, so that the combustion region descends through the raw material charged layer as the pallet 12 moves. The sintering raw material is then sintered by the combustion region to form a mass of sintered ore called a sinter cake.

After the combustion region passes through the entire raw material charged layer, sintering of the sintering raw material is completed and the sinter cake is obtained. In this production method, the reduction portion 11 is provided downstream of the sintering portion 10 where the sinter cake is sintered. In the reduction portion 11, a reducing gas is distributed to reduce iron oxide contained in the sinter cake. By introducing the reducing gas at the downstream side of the sintering portion 10, the sensible heat remaining in the sinter cake immediately after sintering can be used to reduce the iron oxide contained in the sinter cake. Such a method increases the degree of reduction of the iron oxide contained in the sinter cake so that the degree of reduction of iron oxide in agglomerated ore, which will be a product, is 50 % or more while utilizing the sensible heat of the sinter cake. The sinter cake is then discharged from the sintering machine 100. After the sinter cake is crushed, granulation or the like is performed as appropriate to obtain agglomerated ore as the product. The produced agglomerated ore is conveyed to a reduction furnace for the production of reduced iron, where the iron oxide contained in the agglomerated ore is reduced to obtain reduced iron. The method described above can provide agglomerated ore with a degree of reduction of iron oxide of 50 % or more. Thus, it is possible to produce agglomerated ore, with which the amount of reduction reaction required in the reduction furnace can be decreased and reduced iron can be efficiently produced by hydrogen reduction in the reduction furnace.

In this production method, the iron oxide contained in the sinter cake is reduced by the introduction of reducing gas to achieve a degree of reduction of 50 % or more of the iron oxide contained in the agglomerated ore to be produced. This allows the efficient production of reduced iron by hydrogen reduction, without the need for preheating agglomerated ore as raw material and raising the temperature of the reducing gas. In the present disclosure, the "degree of reduction of the iron oxide contained in agglomerated ore" is an index expressed as a percentage of the ratio of the amount of oxygen (mass%) derived from iron oxide contained in agglomerated ore to the amount of oxygen (mass%) derived from Fe₂O₃, assuming that all of the total iron content (T.Fe.) contained in the agglomerated ore is Fe₂O₃.

The type of the reducing gas is not particularly limited, but it is preferable to use a hydrogen-based gas. Here, the "hydrogen-based gas" means a reducing gas with a hydrogen content of 50 vol.% or more. The H₂ content in the reducing gas is preferably 70 vol.% or more. By performing reduction reaction using the H2-based reducing gas, the amount of CO₂ emission can be decreased compared with a case where reduction reaction is performed using a CO-based reducing gas. By using a reducing gas such as hydrogen, where the reduction reaction is an endothermic reaction, the reduction of iron oxide and cooling of the sinter cake can also be performed in parallel. To decrease the amount of CO₂ emission, the CO content in the reducing gas is preferably decreased as much as possible. The CO content in the reducing gas is preferably 20 vol.% or less, and more preferably 10 vol.% or less.

The reducing gas is preferably distributed from the lower side of the sinter cake. The raw material charged layer is sintered from the top layer, and the bottom layer is sintered at the most downstream side of the sintering portion 10. Thus, it is assumed that the temperature of the lower side (pallet 12 side) of the sinter cake is higher than that of the upper side. Therefore, the iron oxide in the sinter cake can be reduced more efficiently by distributing the reducing gas from the lower side of the sinter cake. In the example in FIG. 1, the reducing gas is preferably distributed through the sinter cake from the bottom of the pallet 12.

In this production method, since reduction is performed using the sensible heat of the sinter cake, there is no need to preheat the reducing gas to be introduced. The temperature of the reducing gas to be introduced is not particularly limited, but in one example, it can be 0 °C or more and 100 °C or less. The temperature of the above reducing gas is measured, for example, by a thermometer installed at the introduction port of the reducing gas.

The amount of reducing gas introduced is not particularly limited as long as the above degree of reduction can be achieved, but can be, for example, 280 Nm³/t-agglomerated ore or more. The upper limit of the amount of reducing gas introduced is preferably 560 Nm³/t-agglomerated ore or less from the viewpoint of production cost. The above amount of reducing gas introduced is measured, for example, by a gas flowmeter installed at the introduction port of the reducing gas. To reduce the sinter cake more suitably, the sinter cake is preferably allowed to remain in the reducing gas for 900 s or more. The upper limit of the residence time is not particularly limited. However, from the viewpoint of productivity, the sinter cake is preferably allowed to remain for 3600 s or less. The above residence time can be calculated by dividing the length of the reduction portion 11 on the sintering machine 100 in the direction of movement of the pallet 12 by the movement rate of the pallet 12.

The reducing gas used to reduce the sinter cake can be optionally recovered above the sinter cake. The recovered reducing gas can be distributed again through the sinter cake from the bottom of the pallet with optional additional reducing gas, after treatments such as dehydration, dust removal, and CO₂ removal.

The condensation material is not particularly limited and can be a biomass raw material, anthracite, coke, or the like. The condensation material preferably contains a biomass raw material. Conventionally, fossil fuel-derived fuels such as anthracite and coke have been used as condensation materials. In contrast, the use of biomass, a carbon-neutral fuel, as the condensation material can further decrease the amount of CO₂ emission. The biomass raw material used as the condensation material is not particularly limited but includes, for example, charcoal and coconut shell charcoal. The condensation material preferably contains 50 mass% or more of biomass raw material. The condensation material may contain 100 mass% of biomass raw material.

The iron-containing raw material is not particularly limited but can be, for example, iron ore, sinter return ore, blast furnace dust, steelmaking dust, rolling scale, or the like. The iron-containing raw material can include SiOz, Al₂O₃, CaO, MgO, and the like, as well as iron oxides such as Fe₂O₃ and FeO.

The mixing ratio of the iron-containing raw material and the condensation material is also not particularly limited and may be as known.

The following describes a sintering machine according to this embodiment. As illustrated in FIG. 1, the sintering machine 100 used in the method for producing agglomerated ore according to this embodiment includes the sintering portion 10, which sinters the sintering raw material containing the iron-containing raw material and the condensation material to form a sinter cake, and the reduction portion 11, which reduces iron oxide contained in the sinter cake by distributing the reducing gas through the sinter cake.

The sintering portion 10 can include the charging hopper 14 for charging the sintering raw material, the drum feeder 15, the pallet 12 for conveying and sintering the sintering raw material, an igniter for igniting the top of the raw material charged layer charged onto the pallet 12, a wind box 17 for drawing air in downward in the raw material charged layer charged onto the pallet 12, and the like, as with known sintering machines.

The reduction portion 11 is provided downstream of the sintering portion 10. In this sintering machine 100, the provision of the reduction portion 11 downstream of the sintering portion 10 enables reduction of the sinter cake on the sintering machine 100. To utilize the sensible heat of the sinter cake more suitably, it is preferably that the reduction portion 11 is directly connected downstream of the sintering portion 10, as illustrated in FIG. 1, so that the sinter cake, which has been conveyed and sintered in the sintering portion 10, is charged into the reduction portion 11 on the continuous pallet 12.

The reduction portion 11 has a reducing gas introduction portion 13 for distributing the reducing gas through the sinter cake on the pallet 12. To distribute the reducing gas from the lower side of the sinter cake, the reducing gas introduction portion 13 is preferably provided at the bottom of the pallet 12. To sufficiently reduce the iron oxide in the sinter cake, a plurality of reducing gas introduction portions 13 are preferably provided at the bottom of the pallet 12. To recover the reducing gas used in the reduction of the sinter cake, the reduction portion 11 preferably includes a reducing gas recovery portion 16. As described above, since reduction is performed in the reduction portion 11 using the sensible heat of the sinter cake, there is no need to provide a heating device in the reduction portion 11.

### <Embodiment 2>

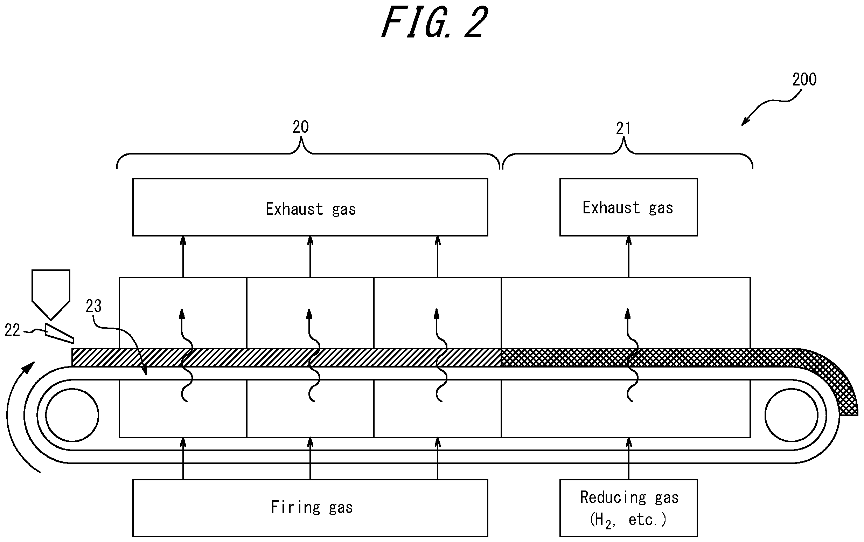

The following describes a method for producing agglomerated ore according to Embodiment 2 of this disclosure. In this embodiment, pellets before reduction are reduced on a pellet firing machine, which fires raw pellets obtained by granulating an iron-containing raw material, using the sensible heat during firing to obtain agglomerated ore with a degree of reduction of iron oxide of 50 % or more. FIG. 2 illustrates an overview of a method for producing agglomerated ore using a pellet firing furnace, in particular, an overview of a pellet production process using the straight grate method. Raw pellets obtained by granulating the iron-containing raw material in advance are charged through a charging hole 22 onto a traveling grate 23 of a firing portion 20 of a pellet firing furnace 200. The raw pellets after charging move through the furnace together with the traveling grate 23. In the process, a firing gas is gradually distributed through the raw pellets to dry and fire them.

Pellets before reduction after firing would be cooled at the downstream side of the firing portion 20 and discharged outside the furnace in the conventional case. On the other hand, in this production method, the reducing gas is distributed through the pellets before reduction after firing at a reduction portion 21, which is provided downstream of the firing portion 20, to make a degree of reduction of the iron oxide contained in the agglomerated ore after firing 50 % or more. Then, the agglomerated ore is discharged from the pellet firing furnace 200 and made into products. The above method can be used to produce agglomerated ore, with which reduced iron can be efficiently produced by hydrogen reduction in the reduction furnace.

The type of the reducing gas distributed through the pellets before reduction is not particularly limited and can be the same as in Embodiment 1.

In this embodiment, the reducing gas can be distributed through the pellets before reduction from above or below. This is because, unlike Embodiment 1, the pellets before reduction are considered to be uniformly heated in this embodiment. FIG. 2 illustrates an example of introducing the reducing gas from below of the pellets before reduction. As in Embodiment 1, the distributed reducing gas may be optionally recovered and distributed again.

In this production method, since reduction is performed using the sensible heat of the pellets before reduction, there is no need to preheat the reducing gas to be introduced. The temperature of the reducing gas to be introduced is not particularly limited, but in one example, it can be 0 °C or more and 100 °C or less. The temperature of the above reducing gas is measured, for example, by a thermometer installed at the introduction port of the reducing gas.

The amount of reducing gas introduced is not particularly limited as long as the above degree of reduction can be achieved, but can be, for example, 280 Nm³/t-agglomerated ore or more. The unit "Nm³/t-agglomerated ore" indicates the amount of reducing gas introduced (Nm³) per unit weight (ton) of agglomerated ore. The upper limit of the amount of reducing gas introduced is preferably 560 Nm³/t-agglomerated ore or less from the viewpoint of production cost. The above amount of reducing gas introduced is measured, for example, by a gas flowmeter installed at the introduction port of the reducing gas. To reduce the pellets before reduction more suitably, the pellets before reduction are preferably allowed to remain in the reducing gas for 900 s or more. The upper limit of the residence time is not particularly limited. However, from the viewpoint of productivity, the pellets before reduction are preferably allowed to remain for 3600 s or less. The above residence time can be calculated by dividing the length of the reduction portion 21 on the pellet firing machine in the direction of movement of the traveling grate 23 by the movement rate of the traveling grate 23.

The iron-containing raw material that forms the raw pellets are not particularly limited and can be the same as in Embodiment 1.

When the raw pellets are fired, high-temperature firing gas is introduced through the raw pellets. For example, a mixture of combustion gas of a firing fuel and air can be used as the firing gas. The firing fuel, which adjusts the ambient temperature of the firing gas, is not particularly limited, and a biomass raw material, natural gas, or the like can be used. The firing fuel preferably contains a biomass raw material. Conventionally, fossil fuel such as natural gas and coal is used as the firing fuel, which emits a certain amount of CO₂. In contrast, this production method uses biomass, a carbon-neutral fuel, as the firing fuel, thereby further reducing the amount of CO₂ emission. Biomass raw materials as exemplified in Embodiment 1 can be used. The firing fuel preferably contains 50 mass% or more of biomass raw material. The firing fuel may contain 100 mass% of biomass raw material.

The following describes a pellet firing furnace according to this embodiment. As illustrated in FIG. 2, the pellet firing furnace 200 used in the method for producing agglomerated ore according to this embodiment includes the firing portion 20, which conveys and fires raw pellets containing an iron-containing raw material to form pellets before reduction, and the reduction portion 21, which reduces iron oxide contained in the iron-containing raw material by distributing the reducing gas through the pellets before reduction.

The firing portion 20 can include the charging hole 22 for charging raw pellets, the traveling grate 23 for conveying and firing the raw pellets, a firing gas introduction portion for distributing the firing gas through the raw pellets, a firing gas recovery portion for recovering and reintroducing the firing gas, a firing gas heating portion for heating the firing gas, and the like, as with known pellet firing machines.

The reduction portion 21 is provided downstream of the firing portion 20. As described above, conventionally, pellets before reduction after firing are cooled at the downstream side of the firing portion 20 and discharged outside the furnace. However, in this pellet firing furnace 200, the provision of the reduction portion 21 downstream of the firing portion 20 enables reduction of the pellets before reduction on the pellet firing furnace 200. To utilize the sensible heat of the pellets before reduction more suitably, it is preferably that the reduction portion 21 is directly connected downstream of the firing portion 20, as illustrated in FIG. 2, so that the pellets before reduction, which have been conveyed and fired in the firing portion 20, are charged into the reduction portion 21 on the continuous traveling grate 23.

The reduction portion 21 has a reducing gas introduction portion for distributing the reducing gas through the pellets before reduction on the traveling grate 23. To recover the reducing gas used in the reduction of the pellets before reduction, the reduction portion 21 preferably includes a reducing gas recovery portion. In addition, as described above, since reduction is performed in the reduction portion 21 using the sensible heat of the pellets before reduction, there is no need to provide a heating device in the reduction portion 21. A partition can be provided between the firing portion 20 and the reduction portion 21 to separate the atmosphere as appropriate.

### <Agglomerated ore>

The degree of reduction of iron oxide contained in the agglomerated ore produced by this method for producing agglomerated ore is 50 % or more. This allows the efficient production of reduced iron by hydrogen reduction, without the need for preheating the agglomerated ore as raw material and raising the temperature of the reducing gas. The degree of reduction of iron oxide contained in the agglomerated ore is preferably 50 % or more, and more preferably 55 % or more. The upper limit of the degree of reduction of iron oxide contained in the agglomerated ore is not particularly limited but can be 65 % or less because it is inefficient to reduce more than use up the sensible heat after agglomerated ore production in the agglomerated ore production process.

### <Method for producing reduced iron>

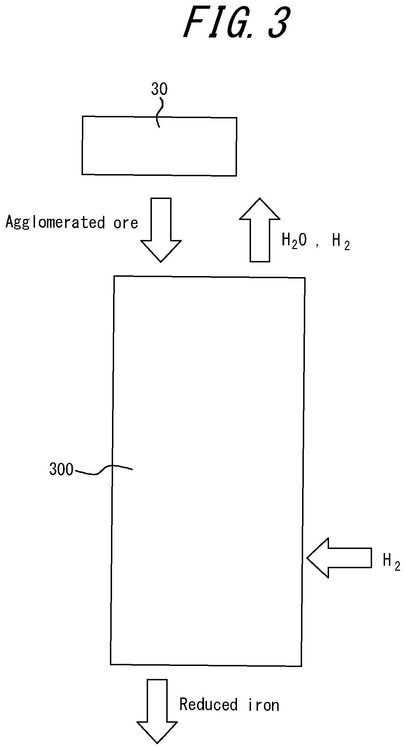

Reduced iron can be obtained by reducing the iron oxide contained in the agglomerated ore produced using the above method for producing agglomerated ore. A known reduction furnace can be used for the reduction of iron oxide contained in the agglomerated ore. The type of the reduction furnace is not particularly limited and can be a shaft furnace or a blast furnace. As described above, this production method can efficiently produce reduced iron by hydrogen reduction, without the need for preheating the raw material and raising the temperature of the reducing gas, since the iron oxide contained in the agglomerated ore is partially reduced. FIG. 3 illustrates an overview of the production of reduced iron using a shaft furnace. As illustrated in FIG. 3, a raw material charging device 30 for charging the agglomerated ore is located at the top of a shaft furnace 300. The raw material charging device 30 feeds the agglomerated ore to the top of the furnace. The reducing gas is introduced into the furnace. The agglomerated ore after being charged into the furnace is heated by heat exchange with the reducing gas, and the iron oxide contained in the agglomerated ore is then reduced to be reduced iron. The reduced agglomerated ore is discharged outside the furnace from the bottom of the furnace.

As described above, the degree of reduction of the iron oxide contained in the agglomerated ore produced using the above method for producing agglomerated ore is 50 % or more. Therefore, even if a hydrogen-based gas is used as the reducing gas to be introduced into the reduction furnace, the effect of heat absorption due to the hydrogen reduction reaction is small, and reduced iron can be efficiently produced. Here, the "hydrogen-based gas" means a reducing gas with a hydrogen content of 50 vol.% or more. The H₂ content in the reducing gas is preferably 70 vol.% or more. Since the hydrogen-based gas can be used as the reducing gas, the amount of CO₂ emission can also be decreased. In addition, this method for producing reduced iron has no need for preheating the agglomerated ore as raw material and raising the temperature of the reducing gas to be introduced into the furnace. Therefore, according to this method for producing reduced iron, reduced iron can be produced safely without increasing production costs. According to this method for producing reduced iron, the degree of reduction of the iron oxide contained in the product reduced iron can be increased to 90 % or more, preferably 95 % or more, by hydrogen reduction, without the need for preheating the agglomerated ore as raw material and raising the temperature of the reducing gas to be introduced into the furnace. The "degree of reduction of the iron oxide contained in the product reduced iron" is an index expressed as a percentage of the ratio of the amount of oxygen (mass%) derived from the iron oxide contained in the product reduced iron to the amount of oxygen (mass%) derived from Fe₂O₃, assuming that all of the total iron content (T.Fe) contained in the product reduced iron is Fe₂O₃.

### EXAMPLES

Hereinafter, examples of this disclosure will be described, but this disclosure is not limited to the following examples. To confirm the effectiveness of the method for producing agglomerated ore according to this embodiment, agglomerated ore was produced using a sintering machine or a pellet firing furnace, and reduced iron was produced from the agglomerated ore as raw material using a shaft furnace. When pre-reduction is performed in the sintering machine or the pellet firing furnace, the reducing gas used in the pre-reduction was pure H₂. In the shaft furnace, as illustrated in FIG. 3, agglomerated ore was charged from the top of the furnace without preheating, and pure H₂ was used as the reducing gas. The temperature of pure H₂ was set to the same level as when a mixed gas of CO and H₂ is used as the reducing gas. During the above operations, we focused on the degree of reduction of the product reduced iron and judged the product reduced iron as good or bad based on the degree of reduction of the product reduced iron being 90 % or more. We also focused on changes in the amount of CO₂ emission in the agglomerated ore production process and the reduced iron production process and also confirmed whether the amount of CO₂ emission could be decreased using the method of this embodiment.

Table 1 lists the results of the operations conducted to confirm the effectiveness of the method for producing agglomerated ore according to this embodiment. In Table 1, the ratio of the amount of CO₂ emission in each operation to the amount of CO₂ emission in Comparative Example 1 is noted as "Ratio of amount of CO₂ emission" as an index of the amount of CO₂ emission.

Table 2 presents the composition and degree of pre-reduction of the agglomerated ore before being charged into the shaft furnace in each example. The degree of reduction of the product and the degree of reduction of the agglomerated ore (degree of pre-reduction) in Tables 1 and 2 are each the ratio expressed as a percentage of the amount of oxygen derived from the iron oxide actually contained in the product reduced iron or the agglomerated ore to the amount of oxygen derived from Fe₂O₃, assuming that all of the total iron in the product reduced iron or the agglomerated ore in each operation is derived from Fe₂O₃. In Table 2, total iron is referred to as T.Fe and metallic iron is referred to as M.Fe. The results of each operation are briefly described below.

Comparative Examples 1 and 2 are the results of operations using agglomerated ore produced by conventional methods. That is, Comparative Example 1 is the result of an operation in which sintered ore produced in a conventional sintering machine was charged as agglomerated ore into a shaft furnace to produce reduced iron by hydrogen reduction, and Comparative Example 2 is the result of an operation in which pellets produced in a conventional pellet firing furnace were charged as agglomerated ore into a shaft furnace to produce reduced iron by hydrogen reduction. As presented in Table 1, in Comparative Examples 1 and 2, a certain amount of CO₂ was emitted because anthracite or natural gas was used as the condensation material in the sintering machine or as the firing fuel in the pellet firing furnace. In addition, because pre-reduction was not conducted in the agglomerated ore production process, the effect of heat absorption due to the hydrogen reduction reaction in the shaft furnace appeared in the degree of reduction of the product, and the degree of reduction of the product reduced iron in the reduced iron production process in the shaft furnace was 40 %. It was confirmed that the degree of reduction of the product reduced iron did not meet the standard value for the methods of producing agglomerated ore, which were employed in these operations.

Examples 1 and 2 are the results of operations using the agglomerated ore produced by the method for producing agglomerated ore according to this embodiment. That is, in Example 1, the sintered ore produced by the method for pre-reduction by distributing the reducing gas after sintering in a sintering machine is used as agglomerated ore, and in Example 2, the pellets produced by the method for pre-reduction by distributing the reducing gas after firing in a pellet firing furnace are used as agglomerated ore. Each agglomerated ore was charged into a shaft furnace to produce reduced iron by hydrogen reduction. The operation was then conducted so that the degree of pre-reduction of the agglomerated ore was 50 %. As presented in Table 1, in Examples 1 and 2, the amounts of CO₂ emission were decreased compared with those in Comparative Examples 1 and 2 because biomass was used as the condensation material in the sintering machine or as the firing fuel in the pellet firing furnace. In addition, the degree of reduction of the product reduced iron was 95 %, which is higher than the standard value, and it was confirmed that the shaft furnace can be operated using pure H₂ as the reducing gas.

The following describes Examples 3 and 4. Examples 3 and 4 are the results of operations using the agglomerated ore produced by the method for producing agglomerated ore according to this embodiment. That is, in Example 3, the sintered ore produced by the method for pre-reduction by distributing the reducing gas after sintering in a sintering machine was used as agglomerated ore, and in Example 4, the pellets produced by the method for pre-reduction by distributing the reducing gas after firing in a pellet firing furnace were used as agglomerated ore. Each produced agglomerated ore was charged into a shaft furnace to produce reduced iron by hydrogen reduction. In Examples 3 and 4, the operation was then conducted so that the degree of reduction of iron oxide contained in the agglomerated ore was 50 % . As presented in Table 1, in Example 3 and 4, CO₂ was emitted more than in Examples 1 and 2, because anthracite or natural gas was used as the condensation material in the sintering machine or as the firing fuel in the pellet firing furnace. However, in Examples 3 and 4, the degree of reduction of the product reduced iron was 95 %, which is higher than the standard value, and it was confirmed that the shaft furnace can be operated using pure H₂ as the reducing gas.

Comparative Examples 3 and 4 are the results of operations in which agglomerated ore was produced by employing only some of the production conditions of the method for producing agglomerated ore according to this embodiment and the agglomerated was used. That is, in Comparative Example 3, the sintered ore produced by the method for pre-reduction by distributing the reducing gas after sintering in a sintering machine was charged as agglomerated ore into a shaft furnace to produce reduced iron by hydrogen reduction, and in Comparative Example 4, the pellets produced by the method for pre-reduction by distributing the reducing gas after firing in a pellet firing furnace were charged as agglomerated ore into a shaft furnace to produce reduced iron by hydrogen reduction. In each agglomerated ore production process in Comparative Examples 3 and 4, the operation was then performed so that the degree of pre-reduction of the agglomerated ore was 40 %. As presented in Table 1, because biomass was used as the condensation material in the sintering machine or as the fuel in the pellet firing furnace in Comparative Examples 3 and 4, the amounts of CO₂ emission were decreased compared with those in Comparative Examples 1 and 2. However, because of insufficient pre-reduction in the agglomerated ore production process, the effect of heat absorption due to the hydrogen reduction reaction in the shaft furnace appeared in the degree of reduction of the product, and the degree of reduction of the product reduced iron was 78 %, which was lower than the standard of 90 %.

It was confirmed that, as in the operations in Comparative Examples 3 and 4 above, in the examples that do not meet the production conditions for the method for producing agglomerated ore according to this embodiment, although the amount of CO₂ emission can be decreased, the shaft furnace cannot be operated using pure H₂ as the reducing gas since the standard for the degree of reduction of the product reduced iron cannot be met.

### [Table 1]

**Table 1**

| | Unit | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Agglomerated ore production process | - | Sintering machine | Pellet firing furnace | Sintering machine | Pellet firing furnace | Sintering machine | Pellet firing furnace | Sintering machine | Pellet firing furnace |
| Condensation material/Fuel | - | Biomass | Biomass | Anthracite | Natural gas | Anthracite | Natural gas | Biomass | Biomass |
| Pre-reduction in agglomerated ore production process | - | With | With | With | With | Without | Without | With | With |
| Degree of pre-reduction of agglomerated ore | % | 51.2 | 50.5 | 50.9 | 52.1 | 0.0 | 0.0 | 39.0 | 41.0 |
| Degree of reduction of reduced iron | % | 95.2 | 94.6 | 95 | 95.6 | 42.1 | 39.7 | 77.7 | 79.0 |
| Ratio of amount of CO₂ emission | - | 0.05 | 0.06 | 0.98 | 0.99 | 1.00 | 1.02 | 0.06 | 0.05 |
| Determination | - | ○ | ○ | ○ | ○ | × | × | × | × |

### [Table 2]

**Table 2**

| | Unit | Example 1 | Example 2 | Example 3 | Example 4 | Comparative Example 1 | Comparative Example 2 | Comparative Example 3 | Comparative Example 4 |
|---|---|---|---|---|---|---|---|---|---|
| T.Fe | mass% | 76.6 | 76.8 | 76.6 | 76.3 | 66.0 | 66.0 | 79.8 | 79.2 |
| MFe | mass% | 17.9 | 18.7 | 18.3 | 16.8 | 0.0 | 0.0 | 33.2 | 30.6 |
| Fe₂O₃ | mass% | 0.0 | 0.0 | 0.0 | 0.0 | 93.7 | 93.7 | 0.0 | 0.0 |
| FeO | mass% | 75.5 | 74.6 | 75.1 | 76.6 | 0.6 | 0.6 | 59.9 | 62.5 |
| SiO₂ | mass% | 1.1 | 1.0 | 0.9 | 1.0 | 0.9 | 0.9 | 1.1 | 1.2 |
| Al₂O₃ | mass% | 2.4 | 2.5 | 2.3 | 2.5 | 2.1 | 2.1 | 2.6 | 2.4 |
| CaO | mass% | 2.3 | 2.3 | 2.4 | 2.2 | 2.0 | 2.0 | 2.2 | 2.5 |
| MgO | mass% | 0.8 | 0.9 | 1.0 | 0.9 | 0.7 | 0.7 | 1.0 | 0.8 |
| Degree of pre-reduction | % | 51.2 | 50.5 | 50.9 | 52.1 | 0.0 | 0.0 | 39 | 41 |

### REFERENCE SIGNS LIST

- 100: sintering machine
- 10: sintering portion
- 11: reduction portion
- 12: pallet
- 13: reducing gas introduction portion
- 14: charging hopper
- 15: drum feeder
- 16: reducing gas recovery portion
- 17: wind box
- 200: pellet firing furnace
- 20: firing portion
- 21: reduction portion
- 22: charging hole
- 23: traveling grate
- 300: shaft furnace
- 30: raw material charging device

## Claims

1. A method for producing agglomerated ore, the method comprising sintering a sintering raw material containing an iron-containing raw material and a condensation material in a sintering machine to form a sinter cake, and obtaining agglomerated ore by crushing the sinter cake,
wherein iron oxide contained in the sinter cake is reduced by distributing a reducing gas through the sinter cake on the sintering machine, to make a degree of reduction of iron oxide contained in the agglomerated ore after crushing 50 % or more.

2. The method for producing agglomerated ore according to claim 1, wherein the sintering machine includes a sintering portion that sinters the sintering raw material to form the sinter cake and a reduction portion that distributes the reducing gas through the sinter cake.

3. The method for producing agglomerated ore according to claim 2, wherein the reducing gas is introduced from a lower side of the sinter cake at the reduction portion.

4. The method for producing agglomerated ore according to any one of claims 1 to 3, wherein the condensation material contains a biomass raw material.

5. A method for producing agglomerated ore, the method comprising granulating an iron-containing raw material to form raw pellets, and firing the raw pellets in a pellet firing furnace to obtain agglomerated ore,
wherein iron oxide contained in the iron-containing raw material is reduced by distributing a reducing gas through pellets before reduction after firing on the pellet firing furnace, to make a degree of reduction of iron oxide contained in agglomerated ore after reduction 50 % or more.

6. The method for producing agglomerated ore according to claim 5, wherein the pellet firing furnace includes a firing portion that fires the raw pellets to form the pellets before reduction and a reduction portion that distributes the reducing gas through the pellets before reduction.

7. The method for producing agglomerated ore according to claim 5 or 6, wherein the raw pellets are fired by a firing fuel containing a biomass raw material.

8. A method for producing reduced iron, the method comprising reducing iron oxide contained in agglomerated ore produced using the method for producing agglomerated ore according to any one of claims 1 to 7 to obtain reduced iron.

9. Agglomerated ore having a degree of reduction of iron oxide of 50 % or more.

10. A sintering machine comprising:
a sintering portion that sinters a sintering raw material containing an iron-containing raw material and a condensation material to form a sinter cake; and
a reduction portion that reduces iron oxide contained in the sinter cake by distributing a reducing gas through the sinter cake.

11. A pellet firing furnace comprising:
a firing portion that fires raw pellets containing an iron-containing raw material to form pellets before reduction; and
a reduction portion that reduces iron oxide contained in the iron-containing raw material by distributing a reducing gas through the pellets before reduction.
